**Europäisches Patentamt**

**European Patent Office**

**Office européen des brevets**

(19)

(11) **EP 1 435 533 A1**

(12) **EUROPEAN PATENT APPLICATION**

(43) Date of publication:
**07.07.2004 Bulletin 2004/28**

(51) Int Cl.⁷: **G02B 6/12**

(21) Application number: **02425811.3**

(22) Date of filing: **30.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(71) Applicant: **STMicroelectronics S.r.l.**
**20041 Agrate Brianza (Milano) (IT)**

(72) Inventors:
• **Montanini, Pietro**
**20077 Melegnano (Milano) (IT)**

• **Di Turi, Luigi**
**20134 Milano (IT)**
• **Favretto, Ivana**
**20010 Bareggio (Milano) (IT)**
• **Mottura, Marta**
**20077 Melegnano (Milano) (IT)**

(74) Representative: **Long, Giorgio et al**
**Jacobacci & Partners S.p.A.**
**Via Senato 8**
**20121 Milano (IT)**

(54) **Waveguide manufacturing method and waveguide**

(57)     A method of producing a waveguide (20) with a rounded core integrated in a substrate (1), including phases of:

- forming a lower cladding (3) of the guide supported by the substrate;
- etching said lower cladding to define a concave region delimited by a curved surface (11) and extending along the axis of propagation;
- providing on a free surface (12) of said lower cladding a layer (13) of doped material filling the concave region (4) to form a first portion (17) of the core in contact with the curved surface;
- etching the layer of doped material so that only sufficient volume of doped material for the waveguide core remains;
- heating the doped material so that it forms a rounded core due to surface tension and the concave region of the cladding.

FIG.3

## Description

The present invention concerns methods of manufacturing wave guides and the wave guides obtainable by means of that method.

Known wave guides are integrated in a substrate, a silicon substrate for example, and comprise a buffer layer (also called, lower cladding), a core and an upper cladding. As is known, the propagation of electromagnetic radiations within the core, typically at optical frequencies, is assured by doping the core in such a way as to make it assume a refractive index appropriately greater than the refractive index of the buffer and the upper cladding.

With particular reference to technologies based on silicon, there are nowadays produced wave guides that have a core with a rectangular cross section. These technologies make it possible to obtain cores with rectangular cross sections that are satisfactorily regular in shape.

Nevertheless, the rectangular section does not assure an adequate independence of the losses in the wave guide from the polarization of the electromagnetic radiation that passes through it. In fact, radiation components of different polarization (for example, in a simple case, TE and TM polarization) will suffer different losses during their propagation and thus give rise to a dispersion phenomenon known as PMD (Polarization Mode Dispersion).

For this reason substantial interest would seem to attach to a wave guide having a core of a rounded or even circular section that would assure greater symmetry with respect to the planes transversal to the propagation axis.

In this connection international patent application WO 00/46618 describes a method of producing a wave guide comprising a core interposed between an upper and a lower cladding and integrated into a silica substrate. This international patent application affirms that a core of a circular section can be obtained by means of a heating phase that promotes the diffusion towards the interior of the claddings of any dopants present in the core. According to the document in question, during this diffusion, the core, initially rectangular, comes to assume a circular section.

This method is associated with disadvantages bound up with the complexity of the diffusion phenomena and the fact that it does not assure substantially circular core sections with satisfactory precision.

The object of the present invention is to propose a method of manufacturing wave guides with a rounded section that will overcome the limits and disadvantages associated with the prior art techniques mentioned above.

The object of the present invention is achieved by means of a method of manufacturing wave guides as defined in the annexed Claims 1 to 12.

Another object of the present invention is to provided an integrated wave guide as defined by the annexed Claims 13 to 28.

Further characteristics and advantages of the present invention will be brought out more clearly by the detailed description of some preferred embodiments thereof about to be given by way of example and illustrated by the attached drawings, of which

- Figures 1 to 5 show intermediate phases of a particular method of manufacturing a wave guide core in accordance with the invention;
- Figures 5 to 9 show further phases of the production of the core and the upper cladding of said wave guide.

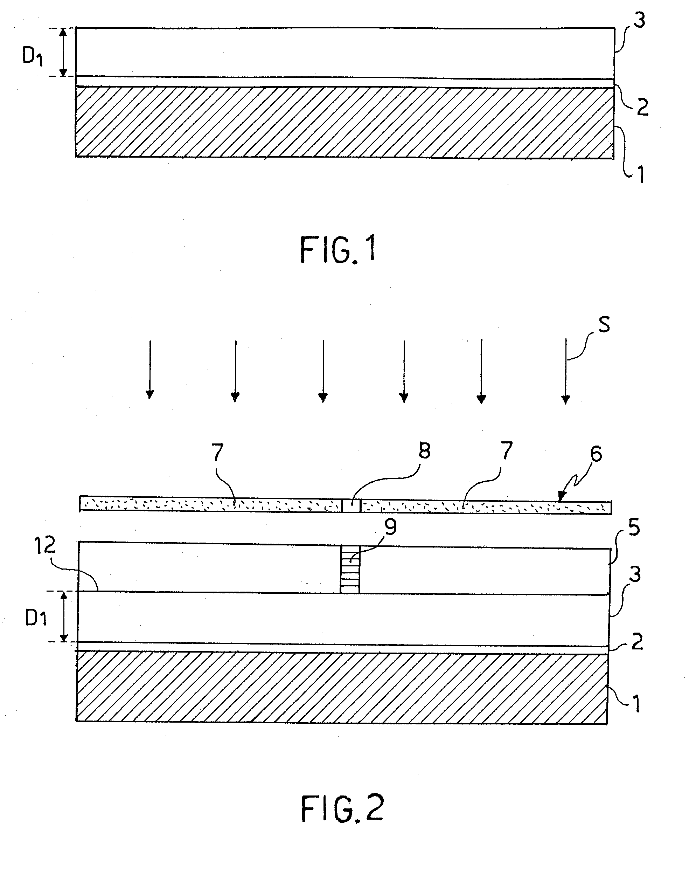

Referring to Figures 1 to 9, there will now be described a particular embodiment of the wave guide manufacturing method in accordance with the invention.

According to this method, on a substrate or wafer 1 (for example, made by silicon) a silicon oxide layer 2 is, preferably, grown. For example, said oxide layer 2 can be obtained by means of a conventional oxidation technique such as, for example, wet thermal oxidation.

This oxide layer 2 may have a thickness comprised, for example, between 0.2 and 1.0 $\mu$m. As will be evident to a person skilled in the art, the oxide layer 2 will be convenient as a layer intermediate between the silicon of substrate 1 and a layer of silicon dioxide to be subsequently deposited, because this will assure necessary continuity between the two employed materials.

On the oxide layer 2 there is formed an intermediate or buffer layer 3 that performs the function of lower cladding of the wave guide to be realized.

Said buffer 3 is preferably formed in substantially pure silica (silicon dioxide). Preferably, the buffer 3 is made by silica containing impurities with a concentration of less than 1% by weight.

Even more preferably, the buffer 3 is realized with silica containing impurities with a concentration of less than 0.5% by weight. In particular, it is preferable for the buffer to have a high melting point and, for example, equal or close to the melting point of pure silica. Less preferably, the silica may be doped with ions - phosphorous and boron ions, for example - but this will cause a lowering of the melting point as compared with the melting point of pure silica.

When pure silica is used, the buffer 3 has a melting point $Tf_3$ that is substantially comprised between 1300°C and 1350°C.

Furthermore, the buffer 3 is such as to have a refractive index $N_3$ of an appropriate value that takes due account of the refractive index $N_2$ of the oxide layer 2. For example, when non-doped silica is used, the refractive index $N_3$ is equal to 1.4575 $\pm$ 0.001 measured at a wavelength amounting to 632 nm.

The buffer 3 may be obtained by means of a deposition of silica on top of the oxide layer 2, Preferably, the deposition technique will be the so-called PECVD (Plasma Enhanced Chemical Vapour Deposition) technique.

Following the deposition, it will be advantageous to carry out a consolidation phase of the buffer 3, which can be realized by means of heating (annealing) in a furnace. For example, the buffer 3 may be heated in an appropriate furnace to a temperature comprised between 1000 and 1300°C.

The thickness D1 of the buffer 3 is, preferably, comprised between 8 and 30 μm.

Referring now to Figure 2, a layer of photosensitive emulsion 5, also known as a photoresist layer, is deposited on an upper flat surface 12 of the buffer 3 and has the function of protecting the buffer 3.

Furthermore, using conventional techniques, there is formed a mask 6 (in glass, for example), appropriately treated in such a manner as to have opaque zones 7 and at least one transparent zone 8.

The mask 6 is then placed in front of the photoresist layer 5 in such a way that the transparent zone 8 comes to be a zone of the buffer 3 intended to contain at least a part of the core of the wave guide.

The mask 6 is exposed to an electromagnetic radiation S of an appropriate wavelength (ultraviolet radiation, for example) that, passing through the transparent zone, will strike and polymerize a portion 9 of the photoresist 5. This is followed by a conventional phase of developing the photoresist 5, during which the portion 9 is removed by means of a suitable chemical etching.

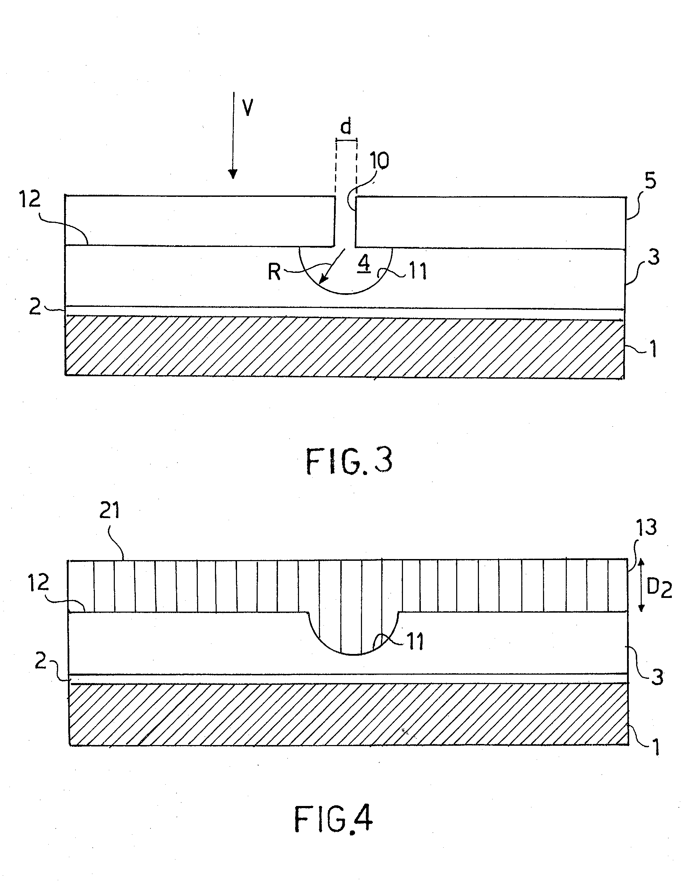

As a result of this removal, one obtains an opening 10 within the photoresist layer 5 (shown in Figure 3).

The opening 10 extends in a direction parallel to the axis of propagation of the wave guide that is to be obtained and may be, for example, rectangular in plan. Its cross section (with respect to the axis of propagation) has a shorter side d that is particularly small and may be equal to 1 μm, for example.

Subsequently there is carried out a step in which the buffer 3 is etched through the opening 10. This etching is realized in order to remove portions of the buffer 3 in such a way as to define within the buffer a hollow or concave and preferably semi-cylindrical region 4 (delimited by a curved surface 11) that extends along the wave guide propagation axis.

This curved surface 11 extends from the upper surface 12 of the buffer 3, i.e. the surface opposite the oxide layer 2, towards the interior of the buffer and is joined to this upper surface 12.

Preferably, the surface 11 has a section that is substantially circular, the radius R of that section being smaller than the thickness D1 of the buffer 3.

For example, the radius R may be comprised in the range between 1 and 4 μm to obtain a wave guide core having a diameter of 2-8 μm.

Advantageously, an isotropic etching is performed, i.e. a chemical agent capable of etching the buffer 3 at comparable or substantially identical speeds in a vertical direction V and a lateral direction (perpendicular to the previous one) is used. In this way the etching will proceed in the vertical direction V in a manner altogether similar to what is being done in the lateral direction.

Preferably, this isotropic etching can be a wet etching employing a solution capable of etching silicon dioxide such as - for example - an ammonium fluoride and hydrofluoric acid (HF) based solution.

It should be noted that solutions other than those just mentioned may also be employed for the isotropic etching step, including - for example - a water and hydrofluoric acid based solution or other solutions that persons skilled in the art generically refer to as "buffered solutions".

In particular, the substrate 1 is placed in the aforementioned solution for such time as may be needed for the solution to attack the surface of the buffer 3 exposed by the opening 10 and incise the buffer in the desired manner.

Alternatively, the curved surface 11 may be obtained by means of a dry isotropic etching, i.e. employing plasma. In that case the substrate 1 is inserted in an appropriate reactor and a plasma in the gaseous phase is etches the surface of the buffer 3 exposed by the opening 10 to define the surface 11. For example, the plasma employed may be constituted by nitrogen trifluoride (NF3) or by freon 114 (CF4).

On the bases of the description given above and considering the chosen type of isotropic etching, a person skilled in the art will be able to determine appropriate dimensions of the opening 10, the concentration of the employed liquid solution or plasma, the duration of the etching step, and such other parameters as the temperature at which the etching should be carried out and the pressure of the plasma in the reactor.

Turning now to Figure 4, a conventional step of removing the photoresist layer 5 is followed by the formation of a central core layer 13 on the free surface 12 of the semi-cylindrical surface 11 of the buffer 3.

In particular, the core layer 13 fills the concave region 4 (of radius R) defined by the curved surface 11 within the buffer 3 and extends above the surface 12 of the buffer with a thickness $D_2$ (preferably different from zero) and, advantageously, correlated with the radius R of the semi-cylindrical concave region 4. As will become clearer further on, the thickness $D_2$ may be chosen - for example - in such a way as to substantially satisfy the following relationship with the radius R:

$$(D_2)^2 = (\pi R^2)/2 \qquad (1)$$

The core layer 13 is obtained, for example, by depositing a material, preferably silica, that has been suitably doped (for example, with phosphorus ions, or phosphorus and boron ions, or germanium ions) in such a way that the core layer will have a refractive index $N_{13}$ greater than the refractive index $N_3$ of the buffer 3 and thus permit appropriate confinement of the electromagnetic radiation to be propagated in the wave guide.

For example, the refractive index $N_{13}$ of the core layer 13 may be equal to the refractive index $N_3$ of the buffer 3 increased by an amount comprised between 0.15% and 1.5% of $N_3$.

Advantageously, the core layer 13 may be realized in silica doped with substances such as to lower its melting temperature $Tf_{13}$.

Advantageously, the core layer 13 is made by with a material such that its melting point $Tf_{13}$ will be lower than the melting point $Tf_3$ of the buffer 3 by an amount such as to substantially avoid the dopants included in this material diffusing into the interior of the buffer 3 when the temperature of this material is raised to its melting point $Tf_{13}$.

Furthermore, the difference between the melting point $Tf_3$ of the buffer 3 and the melting point $Tf_{13}$ of the core layer 13 is such that when the temperature of the structure of Figures 4-9 is brought up to the melting point $Tf_{13}$, the buffer 3 (and, more particularly, the curved surface 11) will maintain the rounded shape (which may be semi-cylindrical, for example) of the concave region 4 obtained by means of the isotropic attack and, consequently, will not become appreciably deformed.

Preferably, the melting point $Tf_3$ of the buffer 3 and the melting point $Tf_{13}$ of the core layer 13 will differ by at least 150°C (for example, the temperature difference may be comprised between 150°C and 350°C). Even more preferably, the melting point $Tf_3$ of the buffer 3 and that of the core layer 13 will differ by at least 250°C (for example, the temperature difference may be comprised between 250°C and 350°C).

For example, the core layer 13 may include phosphorus as a dopant at a concentration comprised between 2% and 8% by weight, and preferably comprised between 2% and 4.7%. Suitable values for the melting point of the core layer 13 will be substantially comprised between 1110°C and 1200°C.

It should be noted that the formation of the core layer 13 of Figure 4 includes the deposition of the core material on the upper surface 12 of the buffer 3 and subsequent steps of reheating (annealing) and cooling of the deposited layer and the entire structure in order to consolidate the core layer 13. The heating phase makes it possible to fill the cavity 4 formed in the buffer layer 3 and, at the same time, to level an upper surface 21 of the core layer 13. This levelling occurs because the material forming the core layer 13 is heated to a temperature close to its melting point $Tf_{13}$, thereby permitting a part of the material to slide into the cavity 4, while yet maintaining the thickness of the core layer 13 at the desired value $D_2$ in the region around the cavity.

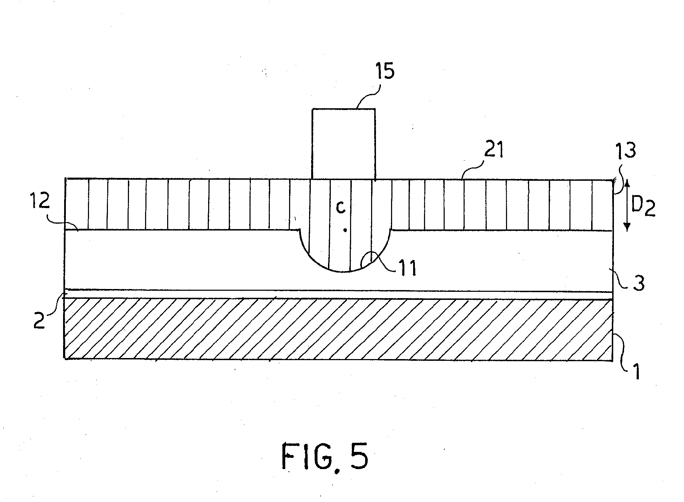

The method in accordance with the invention continues with the deposition of a further layer of photoresist (not shown in the figure) on a free surface 14 of the core layer 13. This is followed by a step in which this photoresist layer is irradiated (using an appropriately treated mask) and a part of the photoresist layer is removed (developed) in such a way as to define the photoresist portion 15 shown in Figure 5.

According to the example of Figure 5, the photoresist portion 15, situated on top of the core layer 13, faces the curved surface 11. Furthermore, the photoresist portion 15 extends parallel to the axis of the wave guide and has, according to this particular example, a section of the rectangular type, and is aligned with the concave region 4 and, more particularly, is aligned with a centre (point) C of the semi-circular section corresponding to the surface 11.

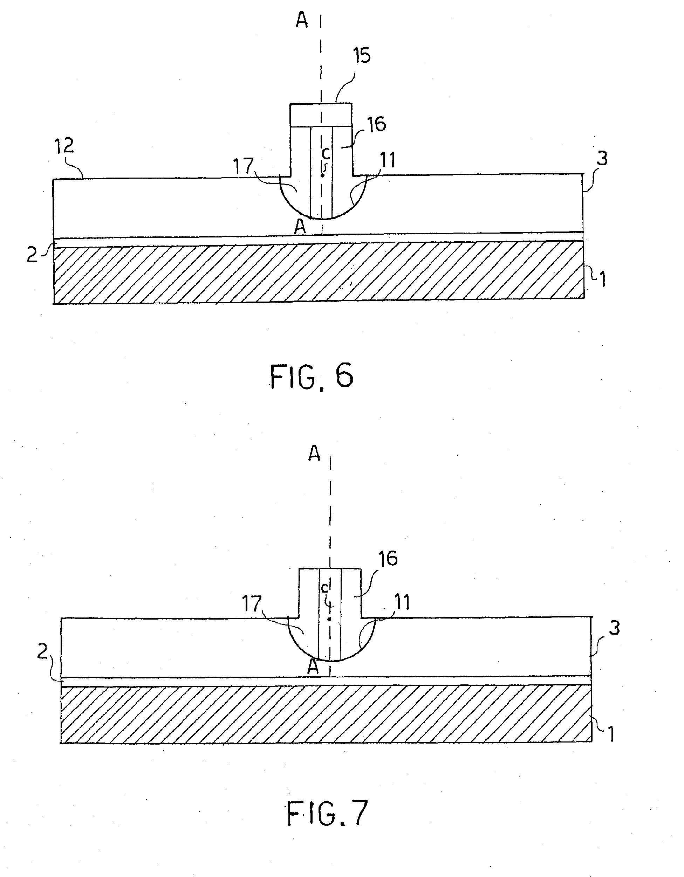

Referring now to Figure 6, the method in accordance with the invention continues with a phase of anisotropic etching of the core layer 13, which can be carried out by means of conventional dry etching techniques. This etching is carried out in such a way as to remove portions of the core layer 13, thereby defining an upper core portion 16 (having, for example, a rectangular section) that extends above the upper surface 12 of the buffer 3 and a lower core portion 17 having a section of the semi-circular type and situated inside the concave region 4 defined by the curved surface 11.

The dimensions of the photoresist portion 15 and the parameters with which this attack is carried out are such as to ensure that the sections of the upper portion 16 and the lower portion 17 have, respectively, areas A1 and A2 of which the sum (A1 + A2) is substantially equal to the area A ($\pi R^2$) of the section of the circular core desired for the wave guide, i.e.:

$$A1 + A2 = A \qquad (2)$$

In other words, having defined a circle of area $A = \pi R^2$ for the transverse section of the core, the two areas A1 and A2 are equivalent. In particular, considering an upper portion 16 having a square shape, its area A1 will comply with the conditions (1) and (2), according to which $A1+A2 = (D_2)^2 + \pi R^2/2 = \pi R^2$. Clearly, the upper portion 16, always provided that it complies with the relationship (2), could also be different in shape, rectangular for example.

Preferably, the upper core portion 16 will have a vertical axis of symmetry A-A passing through the centre C of the semi-circular section corresponding to the curved surface 11.

For greater clarity it should here be specified that the relationship defined above makes reference to cross sections of the portions 16 and 17, that is to say, to portions obtained from intersections with planes at right angles to the axis of propagation of the wave guide, and parallel to the plane of Figure 5.

Subsequently, following a conventional step of removing the photoresist portion 15 (Figure 7), a step of melting the upper and lower core portions 16 and 17 is carried out. In particular, the structure of Figure 6 is heated from room temperature to the melting point $Tf_{13}$ of the core 13 (which may be, for example, equal to $Tf_{13}$ = 1150°C) and is then cooled to be brought back to room temperature.

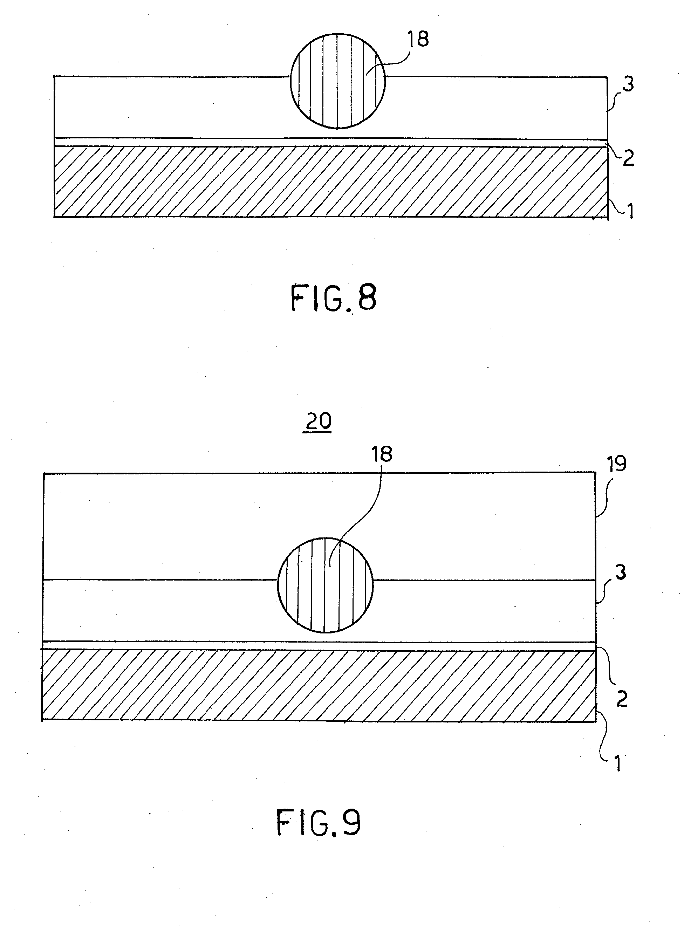

Turning now to Figure 8, during this melting step at the temperature $Tf_{13}$, thanks to the value of the melting point of the buffer 3 (for example, $Tf_3$ = 1300°C), the buffer 3 remains in the solid state and the concave region 4 and, more particularly, the rounded surface 11 maintains the shape obtained by means of the isotropic attack. Furthermore, the face of the buffer 3 corresponding to the rounded surface 11 of the concave region 4 performs a function of containing the molten material that constitutes the lower portion 17 of the core and assures that the material of the core will remain separate from that of the buffer 3.

On the other hand, since the material constituting the upper core portion 16 is free (i.e. is not enclosed between adjacent faces), it will tend to assume a configuration during the melting phase such as to reduce the surface energy to a minimum and will therefore assume a shape having a circular arc, preferably a semicircle, as its section.

The physical phenomenon by virtue of which the minimization of the surface energy leads to the creation of a rounded shape is well known to persons skilled in the art.

It has been shown experimentally that the technique described above makes it possible to align the upper core portion 16 with the lower core portion 17 to a high degree of accuracy. In fact, no substantial misalignments between the two portions were measured, because these portions collapse during the melting phase and form a single body.

It was thus noted that the upper core portion 16 and the lower core portion 17, on being melted, join to form a single core 18 having a rounded and, preferably, substantially circular shape as its section with a high degree of accuracy.

It should be noted that during the melting of the upper and lower core portions 16 and 17 there does not occur any substantial diffusion of the material of the core 18 into the buffer 3. This is due for the most part to the fact that, as was pointed out above, the melting points $Tf_3$ and $Tf_{13}$ are substantially different. Furthermore, the concentrations of dopant inserted in the core layer 13 (phosphorus, for example) are relatively limited and such as not to facilitate this diffusion at the melting and annealing temperatures to which the material of the core 13 is subjected.

It should be noted that, advantageously, the diffusion of dopant from the upper and lower core portions 16 and 17 towards the buffer can be particularly minimized by carrying out the aforesaid heat treatment (i.e. heating to the temperature $Tf_{13}$ and the subsequent cooling) with an adequate rate of change of temperature in the course of time. In particular, the aforesaid heat treatment should be carried out rapidly.

According to an exemplifying temperature change pattern, the heating up to the melting point $Tf_{13}$ is carried out in about 60 seconds, after which the structure is first left at the temperature $Tf_{13}$ for about another 60 seconds (in such a way as to render possible the desired collapse of the material) and then cooled down to room temperature in about another 60 seconds.

This temperature change pattern can be obtained by carrying out the heat treatment with the help of conventional RTPM (Rapid Thermal Processor Machine) equipment. Equipment of this type is marketed, among others by Messrs. Applied Materials, USA.

It should also be noted that, for reasons similar to those explained above, a significant diffusion of the dopants of the core material towards the buffer 3 was avoided also during the annealing of the core layer 13 described with reference to Figure 4.

In a subsequent phase (see Figure 9) an upper cladding layer 19 is deposited on the free surface 4 of the buffer 3 and on the core 18.

This upper cladding 19 is realized in silica appropriately doped so as to obtain a refractive index $N_{19}$ substantially equal to the refractive index $N_2$ of the buffer 3 and a melting point $Tf_{19}$ appropriately lower than the melting point of the buffer 3 and the core 18. In particular, an adequate refractive index $N_{19}$ can be obtained by appropriately dosing such dopants as phosphorus, which will cause the refractive index to go up as its concentration increases, and boron, which will cause the refractive index to diminish as its concentration becomes greater. Furthermore, both the phosphorus and the boron will cause the melting point of the upper buffer 19 to diminish as their concentration in the silica increases.

Preferably, the melting point $Tf_{19}$ of the upper cladding 19 will differ from the melting point $Tf_{13}$ of the core 13 by at least 100°C (for example, the temperature difference $Tf_{13} - Tf_{19}$ will be comprised between 100°C and 450°C). More preferably, the melting point $Tf_{19}$ will differ from the temperature $Tf_{13}$ by at least 250°C (for example, the temperature difference $Tf_{13} - Tf_{19}$ will be comprised between 250°C and 450°C).

According to a particular example, the melting point $Tf_{19}$ of the upper cladding 19 will be comprised between 800 and 1000°C and, preferably, between 880 and 930°C, for example 900°C.

Subsequently, the structure of Figure 9 is subjected to a thermic treatment to consolidate the upper cladding 19 in such a way as to confer the desired thermomechanical properties upon the cladding and the entire structure and to assure their stability during the life of the device. Advantageously, the structure of Figure 9 will be subjected to an annealing treatment that includes heating to a temperature close to or greater than the melting point of the upper cladding 19, followed by appropriate cooling.

Thanks to the choice of melting point as indicated above, this heating step will neither cause the core 18 to melt nor lead to any substantial deformation of the buffer 3, nor will there be any substantial diffusion of material from the core 18 to the buffer 3.

The method in accordance with the invention, comprising the preferential phases described above, will lead to the fabrication of an optical wave guide 20 as shown in Figure 9.

The core 18 of this guide has a section that defines a rounded profile both within the upper cladding 19 and within the buffer 3. In particular, the described method makes it possible to obtain wave guides having cores with an ovoidal, substantially ellipsoidal and, as already said, substantially circular section.

The method of the invention is particularly advantageous, because it does not comprise phases of excessive complexity. Furthermore, this method is compatible with the previously developed integration techniques on silicon and makes it possible to obtain accuracies greater than those obtainable with the known methodologies. The teachings of the present invention can be applied also to materials other than silicon and silica that are suitable for the propagation of electromagnetic waves and can be employed for the production of integrated wave guides.

As persons skilled in the art will note, the teachings of the present invention can be applied also to other materials for the production of integrated wave guides and different from the silica and the silicon considered in the present description with reference to a preferred embodiment of the invention.

**Claims**

1.  A method of producing a wave guide (20) integrated in a substrate (1), including the steps of:

    -   forming a lower cladding (3) of the guide supported by the substrate;
    -   forming a core (16) of the guide by means of a doped material, the core extending along an axis of propagation and having a rounded cross section,

    **characterized in that** said phase of forming the core includes the phases of:

    -   etching said lower cladding to define a concave region delimited by a curved surface (11) and extending along the axis of propagation,
    -   providing on a free surface (12) of said lower cladding a layer (13) of doped material filling the concave region (4) to form a first portion (17) of the core in contact with the curved surface.

2.  A production method in accordance with Claim 1, wherein said etching step is preceded by the steps of:

-   providing a protective layer (5) on the free surface (of the lower cladding,
-   removing portions of the protective layer to define an opening (10) that extends along said axis of propagation and such as to expose a surface of said lower cladding, said etching being carried out through the opening.

3.  A production method in accordance with Claim 2, wherein said protective layer is a photoresist and the step of removing portions of the protective layer is preceded by a step of irradiation of the photoresist by means of a mask (6).

4.  A production method in accordance with Claim 1, wherein said etching step includes an isotropic etching of the lower cladding.

5.  A production method in accordance with Claim 2, wherein said isotropic etching is a chemical wet etching attack or a chemical dry etching.

6.  A production method in accordance with Claim 1, comprising also the steps of:

    -   forming a protective portion (15) placed above said layer of doped material and centred with respect to said first portion (17) of the core,
    -   defining from said layer of doped material an intermediate core portion (17) situated below said protective portion and above said first portion, the intermediate portion extending along the axis of propagation.

7.  A production method in accordance with Claim 6, comprising also the step of:

    -   heating said intermediate portion in such a way as to form a second core portion that becomes joined to the first section and assumes a rounded cross section.

8.  A production method in accordance with Claim 7, wherein said heating step is carried out at a temperature lower than a melting point of said doped material.

9.  A production method in accordance with Claim 8, wherein said heating step is carried out at a temperature such as substantially to avoid a diffusion of dopants included in said doped material into the lower cladding.

10. A production method in accordance with Claim 1, comprising also a step of forming an upper cladding (19) placed on top of said core and said lower cladding.

11. A production method in accordance with Claim 8, comprising also a step of annealing said wave guide, said step being carried out at a temperature lower than said melting point of the doped material.

12. A production method in accordance with Claim 7, wherein said intermediate core portion and said first core portion have respective cross section areas such that their sum is substantially equal to an overall cross section area of the core of the guide.

13. A wave guide (20) integrated in a substrate (1) comprising a structure that includes:

   - a lower cladding (3) of the guide supported by the substrate,
   - a core (18) of the guide that extends along an axis of propagation of the guide and has a rounded cross section,

   **characterized in that** said lower cladding (3) is provided with a curved surface (11) joined to an upper plane surface (12) of the lower cladding such as to define a concave region (4), the concave region extending along the axis of propagation in order to at least partially housing the core, the core being realized in doped material having a first melting point lower than a second melting point of the lower cladding by an amount such that, when the structure is brought up to said first melting point, there is substantially avoided a diffusion into said cladding of the dopants included in said core, and also a deformation of the curved surface defining the concave region.

14. A wave guide (20) in accordance with Claim 13, wherein said first and second melting point differ by at least 150°C.

15. A wave guide (20) in accordance with Claim 14, wherein said first and second melting point differ by at least 250°C.

16. A wave guide (20) in accordance with Claim 13, comprising also an upper cladding (19) of the guide situated above said lower cladding (3) and said core (18), said upper cladding including respective dopants in such a way as to have a third melting point lower than said first and second melting point.

17. A wave guide (20) in accordance with Claim 13, wherein said core has a substantially circular cross section.

18. A wave guide (20) in accordance with Claim 13, wherein said core has a cross section of the ovoidal type.

19. A wave guide (20) in accordance with Claim 13, wherein said core has a cross section of the ellipsoidal type.

20. A wave guide (20) in accordance with Claim 15, wherein said core (18) and said upper cladding (19) are realized in doped silica.

21. A wave guide (20) in accordance with Claim 15, wherein said lower cladding (3) is realized in silicon dioxide.

22. A wave guide (20) in accordance with Claim 13, wherein said substrate is realized in silicon.

23. A wave guide (20) in accordance with Claim 19, wherein said first melting point is substantially comprised between 1110°C and 1200°C.

24. A wave guide (20) in accordance with Claim 20, wherein said second melting point is substantially comprised between 1300°C and 1350°C.

25. A wave guide (20) in accordance with Claim 19, wherein said third melting point is substantially comprised between 800°C and 1000°C.

26. A wave guide (20) in accordance with Claim 13, wherein said dopants are ions of phosphorus or ions of boron.

27. A wave guide (20) in accordance with Claim 213, wherein said lower cladding (3) is realized in pure silicon dioxide.

28. A wave guide (20) in accordance with Claim 13, wherein said curved surface (11) defines a separation face between the lower cladding (3) is realized in pure silicon dioxide and the core (18) of the guide.

FIG.1

FIG.2

FIG.3

FIG.4

FIG. 5

A

15

12

17    c    16    11

3

A

2

1

FIG. 6

A

16

17    c    11

3

2

A

1

FIG. 7

FIG.8

FIG.9

**European Patent Office**

## EUROPEAN SEARCH REPORT

Application Number

EP 02 42 5811

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 013, no. 482 (P-953), 2 November 1989 (1989-11-02) & JP 01 191804 A (TEIJIN SEIKI CO LTD), 1 August 1989 (1989-08-01) | 1-7,12 | G02B6/12 |
| Y | * abstract * | 8-11 | |
| X | PATENT ABSTRACTS OF JAPAN vol. 011, no. 040 (P-544), 5 February 1987 (1987-02-05) & JP 61 210304 A (NIPPON SHEET GLASS CO LTD), 18 September 1986 (1986-09-18) | 13-28 | |
| Y | * abstract * | 8-11 | |
| X | PATENT ABSTRACTS OF JAPAN vol. 009, no. 292 (P-406), 19 November 1985 (1985-11-19) & JP 60 129711 A (OKI DENKI KOGYO KK), 11 July 1985 (1985-07-11) * abstract * | 1-5,10 | |
| | | | **TECHNICAL FIELDS SEARCHED (Int.Cl.7)** |
| X | US 4 384 038 A (KHOE GIOK D ET AL) 17 May 1983 (1983-05-17) * column 4 - column 5 * | 1-5 | G02B |
| X | PATENT ABSTRACTS OF JAPAN vol. 016, no. 218 (P-1357), 21 May 1992 (1992-05-21) & JP 04 042216 A (FUJI PHOTO FILM CO LTD), 12 February 1992 (1992-02-12) * abstract * | 1 | |
| | -/-- | | |

The present search report has been drawn up for all claims

| Place of search | Date of completion of the search | Examiner |
|---|---|---|
| MUNICH | 20 May 2003 | Anderson, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 435 533 A1**

## EUROPEAN SEARCH REPORT

**European Patent Office**

**Application Number**

EP 02 42 5811

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 008, no. 219 (P-306), 5 October 1984 (1984-10-05) & JP 59 101605 A (HITACHI SEISAKUSHO KK), 12 June 1984 (1984-06-12) * abstract * | 1 | |
| A | SUN C J ET AL: "SILICA-BASED CIRCULAR CROSS-SECTIONED CHANNEL WAVEGUIDES" IEEE PHOTONICS TECHNOLOGY LETTERS, IEEE INC. NEW YORK, US, vol. 3, no. 3, 1 March 1991 (1991-03-01), pages 238-240, XP000202940 ISSN: 1041-1135 * the whole document * | 6-12 | |
| A | BOULAS C ET AL: "LOW LOSS MULTIMODE WAVEGUIDES ON SILICON SUBSTRATE" ELECTRONICS LETTERS, IEE STEVENAGE, GB, vol. 28, no. 17, 13 August 1992 (1992-08-13), pages 1648-1649, XP000315891 ISSN: 0013-5194 * the whole document * | 1 | TECHNICAL FIELDS SEARCHED (Int.Cl.7) |

The present search report has been drawn up for all claims

| Place of search | Date of completion of the search | Examiner |
|---|---|---|
| MUNICH | 20 May 2003 | Anderson, C |

EPO FORM 1503 03.82 (P04C01)

**ANNEX TO THE EUROPEAN SEARCH REPORT
ON EUROPEAN PATENT APPLICATION NO.**                       EP 02 42 5811

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2003

| Patent document cited in search report | | Publication date | Patent family member(s) | | Publication date |
|---|---|---|---|---|---|
| JP 01191804 | A | 01-08-1989 | NONE | | |
| JP 61210304 | A | 18-09-1986 | NONE | | |
| JP 60129711 | A | 11-07-1985 | NONE | | |
| US 4384038 | A | 17-05-1983 | NL | 8006410 A | 16-06-1982 |
| | | | CA | 1191108 A1 | 30-07-1985 |
| | | | EP | 0052901 A1 | 02-06-1982 |
| | | | JP | 57118201 A | 23-07-1982 |
| JP 04042216 | A | 12-02-1992 | NONE | | |
| JP 59101605 | A | 12-06-1984 | NONE | | |

EPO FORM P0459

For more details about this annex : see Official Journal of the European Patent Office, No. 12/82